# EUROPÄISCHE PATENTANMELDUNG

(11) **EP 4 461 672 A1**
(43) Veröffentlichungstag der Anmeldung: **13.11.2024**
(21) Anmeldenummer: 23172687.8
(22) Anmeldetag: 10.05.2023
(51) Int. Cl.: B65G 1/06, B64F 1/36

(54) **FÖRDERANLAGE UMFASSEND EIN SPEICHERSYSTEM UND EINE END-STELLE UND VERFAHREN ZUM SPEICHERN VON LADUNGSTRÄGERN IN EINER FÖRDERANLAGE**

(71) Anmelder: Siemens Logistics GmbH, 90429 Nürnberg (DE)
(72) Erfinder: Klein, Matthias, 63456 Hanau (DE)
(74) Vertreter: Siemens Patent Attorneys

(57) **Zusammenfassung**

Die Erfindung offenbart eine Förderanlage für Stückgüter mit zugeordneten Sortierkriterien in einheitlichen Ladungsträgern, insbesondere eine Flughafen-Gepäckförderanlage, umfassend ein Verteilsystem, mindestens ein Speichersystem und mindestens eine Endstelle, insbesondere ein Gepäckkarussell. Das Verteilsystem ist oberhalb des Speichersystems und das Speichersystem oberhalb der Endstelle angeordnet. Die Endstelle umfasst mindestens einen eigenen Vertikalförderer, ausgestaltet zum direkten Überführen eines Ladungsträgers vom Verteilsystem zum Speichersystem und umgekehrt, sowie vom Speichersystem zur Endstelle und umgekehrt. Jede Endstelle ist einem Speichersystem zugeordnet. Die Förderanlage is ausgestaltet ist, jedes Speichersystem mit Ladungsträgern mit übereinstimmenden Sortierkriterien zu befüllen. Das Speichersystem weist eine durch horizontale Bedienwege gebildete Speicherstruktur auf, so dass diese Speicherstruktur eine parallele Reihenstruktur mit jeweils zueinander parallelen Regalreihen aufweist. Die Bedienwege in dem Speichersystem werden begrenzt jeweils in ihrer Querrichtung entlang den Regalreihen beiderseits durch Regaleinheiten der jeweiligen Regalstruktur und wobei die Bedienweg zumindest annähernd gradlinig verlaufende, sich in Längsrichtung erstreckende Wege sind, auf dem sich eine von der Förderanlage umfasste Bedieneinheit bewegt und wobei sich sämtliche Bedienwege des Speichersystems entlang der Längsrichtung erstrecken. Die Bedieneinheit ist ausgestaltet zum Transportieren der Ladungsträger entlang den Regalreihen und zum Be- und Entladen von Regalfächern der Regalreihen. Die Bedieneinheit und der Vertikalförderer sind zur gegenseitigen Übernahme von Ladungsträgern ausgestaltet oder die Bedieneinheit ist von dem Vertikalförderer umfasst.

## Beschreibung

Die vorliegende Erfindung betrifft das technische Gebiet der Förderanlagen, genauer der Speichersysteme für Ladungsträger. Die Ladungsträger eignen sich zur Aufnahme von Stückgütern, die Erfindung eignet sich jedoch auch für leere Ladungsträger. Insbesondere betrifft die Erfindung Frühgepäckspeicher im Flughafenbereich.

Im Flughafenumfeld ist es notwendig, Gepäck von Passagieren temporär für mehrere Stunden zu speichern. Grund für diese Frühgepäckspeicherung kann ein sehr früher Check In, eine Verspätung des Abfluges, ein längerer Zwischenstopp sein. Im Prozess des Flughafenbetreibers tritt am wenigsten Mehraufwand auf, wenn dieses Gepäck in der Gepäckförderanlage zwischengelagert wird und zeitlich passend zur Verladung in das Flugzeug ausgelagert wird. Je unkomplizierter, günstiger und ausfallsicherer Betrieb und Aufbau eines Frühgepäckspeichers sind, umso mehr kann die Gepäckförderanlage von Gepäckstücken entlastet werden, deren Abfertigungszeitpunkt auch nur wenig in der Zukunft liegt.

Typischerweise wird Check-In und Transit-Gepäck was frühzeitig ins System gelangt auf Trays (Gepäckwannen, Ladungsträgern) einzeln transportiert und in einem oder mehreren zentral angeordneten Frühgepäckspeicher (Early Bag Storage, EBS) gespeichert. Rückt der Abflugzeitpunkt näher wird das im Frühgepäckspeicher eingelagerte Gepäck so wie das noch eintreffende Gepäck über die Fördertechnik an die zugeordnete Gepäckausgabe (Gepäckkarussell) geschickt, dort in ein ULD verladen und zum Flugzeug transportiert. Die Transportstrecken werden zu den Auslagerzeiten durch das Gepäck aus dem Frühgepäckspeicher sowie durch das direkt aufgegebenen Gepäck belastet. Durch die zentrale Lagerung der Gepäckstücke im Frühgepäckspeicher werden lange Transportstecken und damit längere Transportzeiten zum Zeitpunkt der Auslagerung zu den Gepäckkarussellen in Kauf genommen. Durch die langen und mehrfach genutzten Transportstrecken entsteht ein hoher Energie-, Platz- und Komponentenverbrauch.

Es gibt verschiedene Lösungsansätze mittels Linienspeichern in Gurt- oder Wannenanlagen, umlaufende Fördertechnikloops, oder ähnliche Ansätze. Weit verbreitet als Frühgepäckspeicher sind Hochregallager mit zueinander orthogonalen Bedienwegen auf unterschiedlichen Ebenen. Diese erfordern jedoch Eckumsetzer und sind zudem zentral angeordnet. Zwar werden Gepäckstücke mit übereinstimmenden Sortierkriterien zumeist in benachbarten Regalfächern zwischengespeichert, aber für Entnahme und Transport zur Endstelle (typischerweise ein Gepäckkarusselle) ist ein Verteilsystem erforderlich. Gepäckstücke in Ladungsträgern mit nicht übereinstimmenden Sortierkriterien werden über ein- und dasselbe Verteilsystem hin zu den Endstellen transportiert, wobei als Verteilsystem derjenige Teil der Gepäckförderanlage herangezogen wird, auf der auch nicht einzuspeichernde Ladungsträger abgefertigt werden und/oder ein gemeinsames Verteilsystem für mehrere Endstellen herangezogen wird. Dies belastet die Gepäckförderanlage, das Verteilsystem ist eine Engstelle und verringert somit den Durchsatz, zudem erfordert das Verteilsystem weitere Bedienelemente, beispielsweise Eckumsetzer, die technisch aufwendig und teuer sind.

Der vorliegenden Erfindung liegt daher die Aufgabe zugrunde, eine verbesserte Förderanlage mit Speicherfunktionalität bereitzustellen. Diese Aufgabe wird durch die in den unabhängigen Ansprüchen beschriebenen Lösungen gelöst.

Die erfindungsgemäße Lösung sieht eine Förderanlage für Stückgüter mit zugeordneten Sortierkriterien in einheitlichen Ladungsträgern vor, insbesondere eine Flughafen-Gepäckförderanlage mit Gepäckwannen als Ladungsträgern, umfassend ein Verteilsystem, mindestens ein Speichersystem und mindestens eine Endstelle, insbesondere ein Gepäckkarussell. Das Verteilsystem ist oberhalb des Speichersystems und das Speichersystem oberhalb der Endstelle angeordnet. Die Endstelle umfasst mindestens einen eigenen Vertikalförderer, ausgestaltet zum direkten Überführen eines Ladungsträgers vom Verteilsystem zum Speichersystem und umgekehrt, sowie vom Speichersystem zur Endstelle und umgekehrt. Jede Endstelle ist einem Speichersystem zugeordnet. Die Förderanlage, genauer gesagt die Steuerung der Förderanlage, ist ausgestaltet, jedes Speichersystem mit Ladungsträgern mit übereinstimmenden Sortierkriterien zu befüllen, wobei die Sortierkriterien jeweils einer Endstelle zuordenbar sind. Vorzugsweise werden keine Ladungsträger mit nicht übereinstimmenden Sortierkriterien in einem gemeinsamen Speichersystem eingelagert. Das Speichersystem weist eine durch horizontale Bedienwege gebildete Speicherstruktur auf, so dass diese Speicherstruktur eine im Wesentlichen parallele Reihenstruktur mit jeweils zueinander im Wesentlichen parallelen Regalreihen aufweist. Anders ausgedrückt ist ein Regalbereich von zueinander im Wesentlichen parallelen Bedienwege durchzogen und bildet so die Speicherstruktur, d.h. die im Wesentlichen parallele Lagerreihenstruktur, aus. Die Bedienwege in dem Speichersystem werde jeweils in ihrer Querrichtung entlang den Regalreihen beiderseits durch Regaleinheiten der jeweiligen Regalstruktur begrenzt, wobei die Bedienwege zumindest annähernd gradlinig verlaufende, sich in Längsrichtung erstreckende Wege sind, auf dem sich eine von der Förderanlage umfasste Bedieneinheit bewegt und wobei sich sämtliche Bedienwege des Speichersystems entlang der Längsrichtung erstrecken. Die Bedieneinheit ist ausgestaltet ist zum Transportieren der Ladungsträger entlang den Regalreihen und zum Be- und Entladen von Regalfächern der Regalreihen, agiert somit als Shuttle. Somit sind die Bedieneinheit und der Vertikalförderer zur gegenseitigen Übernahme von Ladungsträgern ausgestaltet sind oder die Bedieneinheit ist von dem Vertikalförderer umfasst. Gemäß einer bevorzugten Ausführungsform sind sämtliche Bedienwege eines Speichersystems entlang der Längsrichtung angeordnet.

Hinsichtlich eines Verfahrens wird die vorstehend genannte Aufgabe gelöst durch ein Verfahren zum Speichern von Ladungsträgern in einer erfindungsgemäßen Förderanlage nach einem der vorhergehenden Ansprüche. Ein mit einem Stückgut beladener Ladungsträger wird mit dem Vertikalförderer und der Bedieneinheit von dem Verteilsystem in ein Regalfach des Speichersystems geladen, wobei das Speichersystem mit Ladungsträgern mit übereinstimmenden Sortierkriterien beladen wird. Der Ladungsträger wird mit der Bedieneinheit aus dem Regalfach entladen, entlang des Bedienweges hin zum Vertikalförderer transportiert und mit diesem an die Endstelle übergeben.

Unter einem eigenen Vertikalförderer soll ein Vertikalförderer verstanden werden, der Ladungsträger direkt nur an eine einzige Endstelle übergibt. Beispielsweise kann dieser Vertikalförderer ausgestaltet sein als einfacher, ortsfester Lift zwischen dem Verteilsystem und der Endstelle und Zwischenhalt(en) auf mindestens einer Speicherebene. Typisches Sortierkriterium ist ein Flug, so dass eine flugreine Sortierung auf eine Endstelle (im Flughafenbereich typischerweise ein Gepäckkarussell) erfolgt. Bei einer großen Anzahl von Stückgütern mit übereinstimmenden Sortierkriterien können zwei bevorzugt benachbarte Endstellen für dasselbe Sortierkriterium herangezogen werden. Die Ladungsträger sind eindeutig identifizierbar und mit einem Sortierkriterium assoziierbar (bei beladenen Ladungsträgern mit dem Sortierkriterium ihres Stückguts, ein leerer Ladungsträger weist ein leeres Sortierkriterium auf).

Unter einer Regalreihe soll vorzugsweise ein mindestens einstöckiges Regal mit Regalfächern zur Aufnahme der Ladungsträger verstanden werden. Die Bedieneinheit wird einen einzelnen Ladungsträger von dem Vertikalförderer entnehmen, entlang des Bedienweges transportieren und diesen Ladungsträger in ein Regalfach laden. Wenn keine Speicherung mehr gewünscht ist, wird dieselbe oder eine weitere Bedieneinheit den Ladungsträger aus dem Regalfach entnehmen, hin zu dem Vertikalförderer befördern und an diesen übergeben. Gemäss einer Ausführungsform ist das Speichersystem vorzugsweise zweistöckig mit dem Ziel einer Wartungserleichterung (bei nur einer Speicherebene kann ein menschlicher Bediener u.U. den Bedienweg aufgrund nicht ausreichender Höhe nicht aufrecht begehen) und/oder einer verbesserten Platzausnutzung. Ein Bedienweg ist typischerweise als Gang oder Gasse für die Bedieneinheit(en) ausgestaltet.

Die erfindungsgemäße Lösung eliminiert die Notwendigkeit einer aufwendigen Verteilung nach der Entnahme aus dem Speichersystem. Die bereits einmal zwischengespeicherten Ladungsträger werden auf direktem Weg zur Endstelle sortiert, es erfolgt kein Mehrfachtransport auf dem Verteilsystem der Förderanlage. Die für die Zwischenspeicherung ohnehin erforderlichen Vertikalförderer und Bedieneinheiten auf den Bedienwegen werden für den Transport zur Endstelle herangezogen, ohne dass weitere Komponenten oder Transportwege erforderlich sind. Für den Transport eines Stückguts zur Endstelle erfolgt ein vertikaler Materialfluss nur von oben nach unten, ein erneuter Materialfluss von unten nach oben nach der Speicherung ist nicht erforderlich. Dies wird ermöglicht durch die direkte Verbindung zwischen Speichersystem und Endstelle.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile wird im Folgenden eingegangen.

Gemäß einer Ausführungsform kann bei ungünstigen Platzverhältnissen die Förderanlage eine weitere Transportstrecke zwischen dem Vertikalförderer und der Endstelle aufweisen, wobei diese weitere Transportstrecke auch als von der Endstelle umfasst, somit als Bestandteil der Endstelle angesehen werden kann.

Um vertikalen Platz besser auszunutzen und die Bedienwege des Speichersystems ausreichend hoch für das Begehen auszugestalten, kann gemäß einer Ausführungsform das Speichersystem zwei oder mehr Speicherebenen aufweisen, wobei sich sämtliche Bedienwege aller Speicherebenen entlang der Längsrichtung erstrecken, wobei die Bedieneinheit ausgestaltet sein kann zum Be- und Entladen der Regalfächer (d.h. Aus- und Einlagern von Ladungsträgern aus den bzw. in die Regalfächer) auf den zwei oder mehr Speicherebenen oder jede Speicherebene mindestens eine eigene Bedieneinheit aufweisen kann. Der Vertikalförderer kann jede Speicherebene erreichen, wenn die Bedieneinheit keine Hubfunktionalität aufweist, so dass diese nicht zwingend erforderlich ist.

Gemäß einer Ausführungsform kann die Förderanlage zwei oder mehr aneinander angrenzende Speichersysteme umfassen, wobei eine Aufteilung dieser Speichersysteme dynamisch erfolgen kann. Die Aufteilung kann in Abhängigkeit von Bedarf / Anzahl der einzulagernden Stückgüter erfolgen. So benötigt ein Flug mit wenigen Gepäckstücken (kleines Flugzeug, wenig angemeldetes aufgegebenes Gepäck) weniger Regalfächer als ein Flug mit vielen Gepäckstücken.

Gemäß einer Ausführungsform können die Bedienwege und die Reihenstruktur der aneinander angrenzenden Speichersysteme ineinander münden, und eine Bedieneinheit kann ausgestaltet sein, jedes dieser Speichersysteme zu bedienen. Somit sind die Regalreihen im Wesentlichen durchgehend und eine Bedieneinheit ausgestaltet, Ladungsträger zu mehr als einem Vertikalförderer zu transportieren und an diesen zu übergeben. Dies führt zu einer hohen Ausfallsicherheit: wenn eine Endstelle (Karussell) nicht funktioniert, kann eine andere Endstelle verwendet werden, ohne dass das Verteilsystem belastet wird. Zudem werden Bedieneinheiten gespart, da diese für mehr als ein Speichersystem verwendet werden können - auch diese erhöht die Ausfallsicherheit, denn solange die nicht funktionierende Bedieneinheit entfernt oder ans Ende des Bedienwegs geschoben werden kann, kann mit einer anderen Bedieneinheit auf die Regalfächer zugegriffen werden.

Gemäß einer Ausführungsform kann der Vertikalförderer zum Entleeren des Stückguts von der Ladeeinheit auf die Endstelle ausgestaltet sein. Hierzu kann der Vertikalförderer als einfacher Roboter mit Kippfunktionalität ausgestaltet sein. Diese Doppelfunktionalität erlaubt einen Verzicht auf sonst spezifisch als Entleervorrichtungen (z.B. Kipper) ausgestaltete Komponenten.

Gemäß einer Ausführungsform können der Vertikalförderer und/oder die Bedieneinheit ausgestaltet sein zum Stapeln und/oder Vereinzeln von leeren und/oder mit Stückgütern beladenen Ladungsträgern. Die gebildeten Ladungsträger-Stapel können mit oder ohne Stückgüter in den Regalfächern gespeichert oder als Stapel an das Verteilsystem überführt werden. Dies verringert den Bedarf an Regalfächern und entlastet das Verteilsystem, da Stapel leerer Ladungsträger hin zu ihrem Bestimmungsort transportiert werden können. Dies erhöht den Durchsatz der Förderanlage, erfordert aber ein Entstapeln der Ladungsträger an ihrem Bestimmungsort.

Gemäß einer Ausführungsform kann ein Zusatzspeichersystem mit Regalfächern oberhalb der Endstelle angeordnet werden, wobei der Vertikalförderer ausgestaltet sein kann zum Überführen des Ladungsträgers vom Speichersystem zum Zusatzspeichersystem, wobei das Zusatzspeichersystem eine Zusatzbedieneinheit zum Be- und Entladen dieser Regalfächer aufweisen kann und wobei die Zusatzbedieneinheit und der Vertikalförderer zur gegenseitigen Übernahme von Ladungsträgern ausgestaltet sind oder die Zusatzbedieneinheit von dem Vertikalförderer umfasst sein kann. Für ein Entleeren des Zusatzspeichers kann der Vertikalförderer oder ein zusätzliches Entleerungsmittel herangezogen werden.

Gemäß einer Ausführungsform kann ein Be- und Entladen von Regalfächern auf den zwei oder mehr Speicherebenen mit der Bedieneinheit erfolgen. Hierzu weist die Bedieneinheit ein Hubfunktionalität auf. Die Übergabe der Ladungsträger zwischen Vertikalförderer und Bedieneinheit kann auf nur einer Speicherebene erfolgen.

Gemäß einer Ausführungsform kann der Ladungsträger mit einem ersten Vertikalförderer von dem Verteilsystem an die Bedieneinheit des Speichersystems übergeben werden, mit der Bedieneinheit in ein Regalfach dieses Speichersystems geladen werden und nach dem Entladen dieses Regalfachs mit dieser oder einer weiteren Bedieneinheit an einen zweiten Vertikalförderer übergeben werden, wobei dieser zweite Vertikalförderer sowohl diesem als auch einem weiteren Speichersystem, und somit einer weiteren Endstelle, zugeordnet sein kann. Dies erhöht die Ausfallsicherheit der Förderanlage, da die Ladungsträger bei Ausfall einer Endstelle hin zu einer anderen Endstelle transportiert werden können, ohne dass das Verteilsystem belastet wird. Und wenn einer Endstelle mehr als einen zugeordneten Vertikalförderer aufweist, kann bei einem Ausfall des ersten Vertikalförderers ganz einfach der zweite Vertikalförderer herangezogen werden. Ein ausgefallener Vertikalförderer verunmöglicht dann nicht das Überführen des Ladungsträger von dem Speichersystem auf die Endstelle.

Gemäß einer Ausführungsform kann ein Bewegen der Bedieneinheit entlang des Bedienweges zwischen dem Vertikalförderer einer ersten Endstelle, einem Regalfach und einem weiteren Vertikalförderer derselben oder einer weiteren Endstelle erfolgen.

Gemäß einer Ausführungsform kann ein Entleeren des Stückguts von der Ladeeinheit auf die Endstelle mit dem Vertikalförderer erfolgen.

Gemäß einer Ausführungsform kann ein Stapeln und/oder Vereinzeln von leeren und/oder mit Stückgütern beladenen Ladungsträgern mit dem Vertikalförderer und/oder der Bedieneinheit im Speichersystem oder an der Endstelle erfolgen.

Gemäß einer Ausführungsform kann ein Überführen von einem Stapel von Ladungsträgern vom Speichersystem an das Verteilsystem mit dem Vertikalförderer und Fördern dieses Stapels entlang dem Verteilsystem erfolgen.

Gemäß einer Ausführungsform kann der Vertikalförderer und/oder die Bedieneinheit einen Stapel von Ladungsträger ebenso wie einen einzelnen Ladungsträger behandeln. Darunter soll verstanden werden, dass ein Stapel Ladungsträger in Regalfächer ein- und ausgeladen wird, etc.... Einzig das Entleeren des Stückguts von der Ladeeinheit auf die Endstelle sollte anderweitig adaptiert werden, da ein Kippen eines Stapels ebendiesen Stapel zerstören könnte.

Ausführungsformen der Erfindung werden nachfolgend anhand der Figuren beispielsweise näher erläutert. Dabei zeigen:
- Figur 1: einen Querschnitt einer erfindungsgemäßen Förderanlage mit zwei Gepäckkarussellen als Endstellen;
- Figuren 2a, 2b: einen Querschnitt einer erfindungsgemäßen Förderanlage mit jeweils einem Gepäckkarussell ohne (Figur 2a) sowie mit (Figur 2b) Zusatzspeicher;
- Figur 3: eine erfindungsgemäße Förderanlage mit drei Gepäcckarussellen sowie optionalen Zusatzspeichersystemen;
- Figur 4: eine Speicherebene eines Speichersystems; und
- Figur 5: eine erfindungsgemäße Förderanlage mit einem als Roboter ausgestalteten Vertikalförderer.

Die nachfolgenden Ausführungsformen beziehen sich exemplarisch auf eine Flughafen-Gepäckförderanlage 2 mit Gepäckkarussellen 2 als Endstelle 2. Die Stückgüter 14 sind Gepäckstücke, die Ladungsträger 16 Gepäckwannen 16. Die Erfindung ist jedoch nicht auf eine Flughafen-Gepäckförderanlage 2 beschränkt, sondern eignet sich auch für andere Förderanlagen 2, beispielsweise in Logistiklagern. Die gezeigten Speichersysteme 8 weisen jeweils zwei Speicherebenen 8', 8" auf, für die Funktionalität ist jedoch auch nur eine Speicherebene bereits ausreichend.

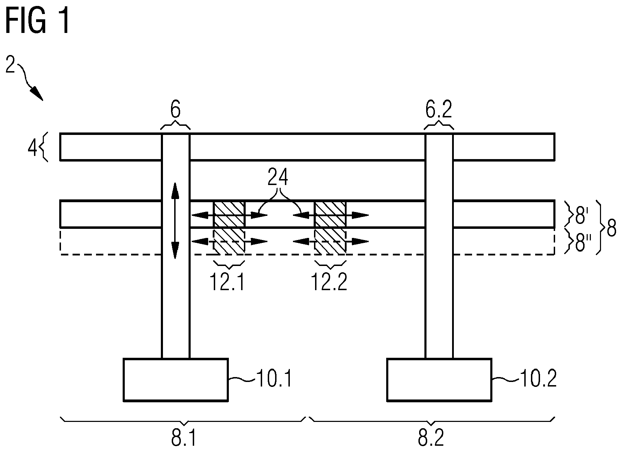

Figur 1 zeigt schematisch und im Querschnitt eine Ausführungsform einer Flughafen-Gepäckförderanlage 2 mit zwei Gepäckkarussellen 10.1, 10.2. Die mit Gepäckstücken 14 befüllten Gepäckwannen 16 werden vom Check-In oder anderen Flugzeugen (Transfer-Gepäck) kommend auf dem Verteilsystem hin zu einem der beiden Vertikalförderer 6, 6.2 befördert. Beide Vertikalförderer 6, 6.2 weisen dieselbe Funktionsweise auf. Der Vertikalförderer übernimmt eine (in Figur 1 nicht dargestellte) Gepäckwanne 16, transportiert sie in der Art eines Lifts hin zum Speichersystem 8, wo eine Bedieneinheit 12 die Gepäckwanne 16 übernimmt. Die Bedieneinheit 12 transportiert die Gepäckwanne 16 entlang einem linearen Bedienweg 26 hin zu einem Regalfach und belädt es. Anschließend kann die Bedieneinheit 12 weitere Gepäckwannen 16 behandeln. Jedes Gepäckkarussell 10.1, 10.2 ist einem Speichersystem 8.1, 8.2 zugeordnet, wobei eine Aufteilung der Speichersysteme 8.1, 8.2 gemäß einer Ausführungsform dynamische erfolgen kann. Wenn keine Speicherung mehr erforderlich ist (Flugabflug nähert sich), wird die Bedieneinheit 12 die Regalfächer eines Speichersystems 8.1 sequenziell entladen, die Gepäckwanne 16 an den Vertikalförderer 6 übergeben und dieser wird die Gepäckwanne an das Gepäckkarussell 10.1 übergeben und je nach Ausführungsform direkt das Gepäckstück 14 auf das Gepäckkarussell 10.1 entladen. Figur 1 zeigt zwei klar voneinander abgegrenzte Speichersysteme 8.1, 8.2, allerdings kann die Grenze dynamisch je nach Bedarf gewählt werden. Leere Gepäckwannen 16 werden vom Vertikalförderer 6 auch von unten nach oben transportiert.

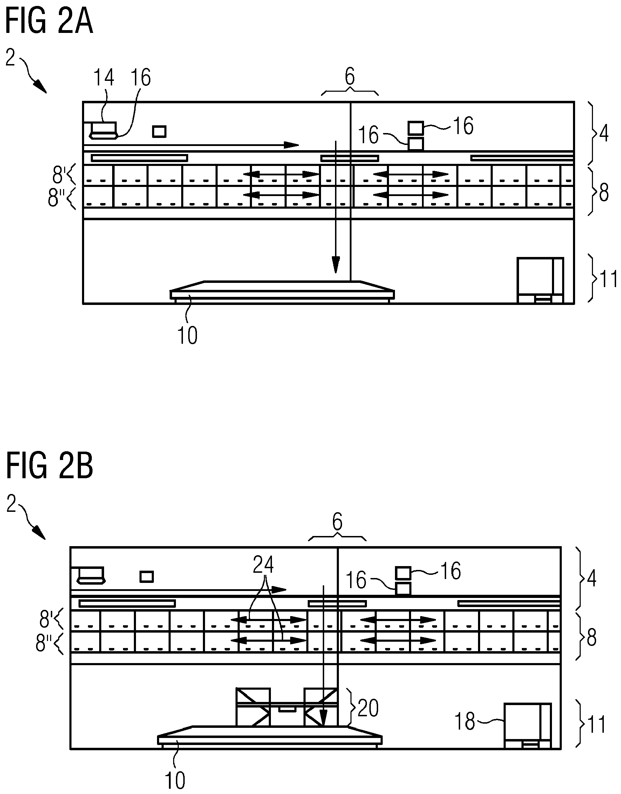

Figuren 2a, 2b zeigen weiteren Ausführungsform von Flughafen-Gepäckförderanlagen 2, wobei Figur 2b noch ein ZusatzSpeichersystem 20 aufweist. Die Bedieneinheiten sind in den Figuren 2 bis 3 nicht explizit dargestellt.

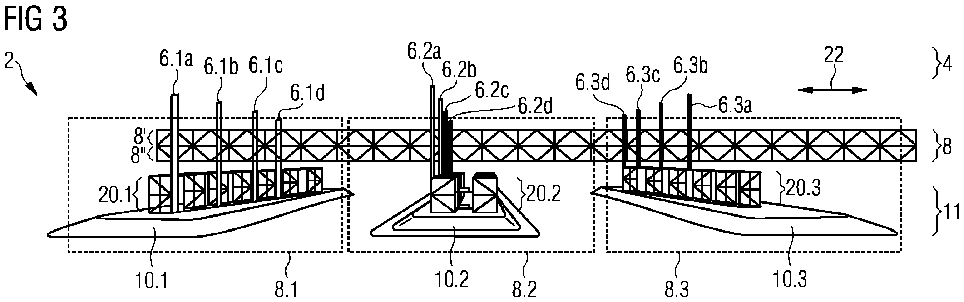

Figur 3 zeigt eine Förderanlage 2 umfassend drei Speichersysteme 8.1, 8.2, 8.3 angeordnet oberhalb von drei Gepäckkarussellen 10.1, 10.2, 10.3 gemäß noch einer weiteren Ausführungsform der Erfindung. Optional und in Figur 3 gezeigt sind noch Zusatzspeichersysteme 20.1, 20.2, 20.3 angeordnet jeweils direkt oberhalb der Gepäckkarusselle 10.1-10.3. Die Vertikalförderer 6.i eines Gepäckkarussells 10.i übergibt die Ladungsträger 16 eines der Speichersysteme 8.i an eine hier nicht dargestellte Zusatzbedieneinheit (alternativ agiert der Vertikalförderer 6.i als Zusatzbedieneinheit), so dass die Ladungsträger 16 gemäß weiteren Unter-Sortierkriterien ihrer Gepäckstücke 14 für das Entladen auf das Gepäckkarussell 10.i in eine bestimmte Reihenfolge gebracht werden.

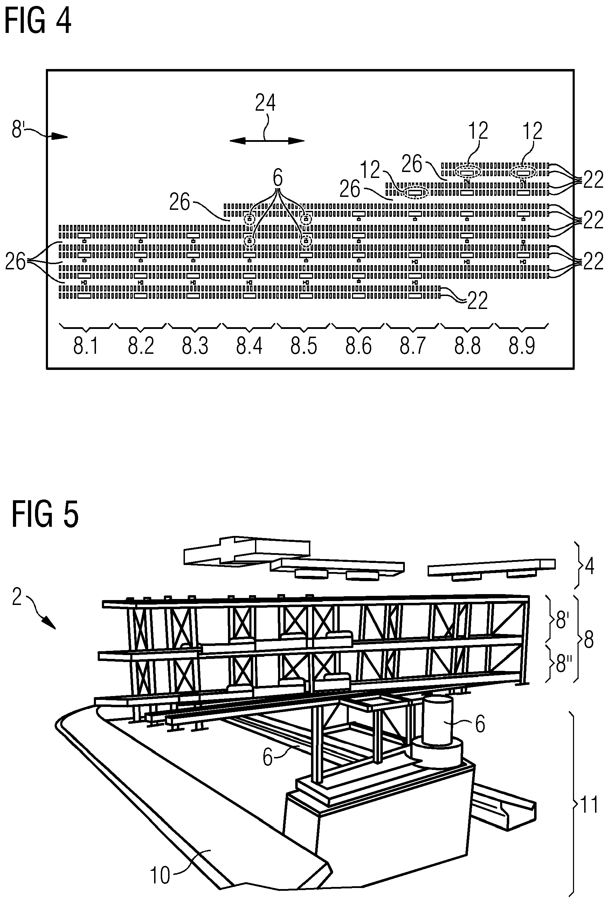

Figur 4 zeigt eine Speicherebene 8' von mehreren Speichersystemen 8.1-8.9 gemäß einer Ausführungsform. Zur Erhöhung der Ausfallsicherheit und zur Durchsatzerhöhung umfasst jedes der Speichersysteme 8.1-8.9 mehrere Vertikalförderer 6, zwingend notwendig ist jedoch nur ein Vertikalförderer 6 je Speichersystem 8.1-8.9. Jedem Speichersystem 8.1-8.9 ist eine eigene Endstelle 10 zugeordnet, die in einer weiteren, unterhalb der Speicherebene 8' angeordneten Auslagerebene 11 liegt. Jedes der Speichersystem 8.1-8.9 weist eine durch horizontale Bedienwege 26 gebildete Speicherstruktur auf, so dass diese Speicherstruktur eine parallele Reihenstruktur mit jeweils zueinander parallelen Regalreihen 22 aufweist. Die Bedienwege 26 werden in dem Speichersystem jeweils in Querrichtung entlang den Regalreihen 22 beiderseits durch Regaleinheiten der jeweiligen Regalstruktur begrenzt. Die Bedienwege 26 der Figur 4 sind gradlinig verlaufende, sich in Längsrichtung erstreckende Gassen 26, wobei die jeweils einem Bedienweg 26 zugeordneten Bedieneinheiten 26 entlang der Gasse 26 bewegt werden, und die Regalfächer be- und entladen. Die Bedieneinheiten 12 und die Vertikalförderer 6 sind zur gegenseitigen Übernahme von Ladungsträgern 16 ausgestaltet. Alternativ kann gemäß einer weiteren Ausführungsform auch die Bedieneinheit 12 von dem Vertikalförderer 6 umfasst sein.

Die Bedienwege 26 einer Förderebene müssen nicht wie in Figur 4 perfekt geradlinig sein, sondern können auch Kurven oder um Ecken fahren, wobei jedoch eine Gestaltung der Bedienwege 26 sowie der Bedieneinheiten 12 derart wünschenswert ist, dass keine Eckumsetzer oder weitere Mittel zur Bewältigung des Bedienweges 26 erforderlich sind. Somit erstrecken sich sämtliche Bedienwege 26 des Speichersystems 8.1 zumindest abschnittsweise entlang der Längsrichtung 24.

Die Bedienwege 26 der aneinander angrenzenden Speichersysteme 8.1-8.9 münden ineinander und bilden einen einzigen Bedienweg 26, und die Bedieneinheiten 26 sind ausgestaltet, sämtliche auf ihrem Bedienweg 26 angeordneten Vertikalförderer 12 zu bedienen. Die einzelnen dezentralen Speichersysteme 8.1-8.9 die verschiedenen Gepäckkarussellen 10.1-10.9 zugeordnet sind, bilden gemeinsam ein großes Lager, welches über den gesamten Bereich der Gepäckkarusselle 10.1-10.9 bzw. ihrer Vertikalförderer 12 angeordnet ist. Dies ermöglicht ein Wechsel zwischen den einzelnen, den Gepäckkarussellen 10.1-10.9 zugeordneten Speichersystemen 8.1-8.9 auch ohne Nutzung der Förderstrecken des Verteilsystems 4. Um die Ausfallsicherheit zu erhöhen sind in jeder Gasse 26 mehrere Shuttles 12 im Einsatz.

Gemäß einer bevorzugten Ausführungsform sind sämtliche Bedienwege 26 eines Speichersystems 8 entlang der Längsrichtung 24 angeordnet.

Gemäß einer weiteren Ausführungsform werden nach dem Entleeren der Gepäckwannen 16 auf das Gepäckkarussell 10 die Gepäckstücke 14 in Transporteinheiten wie ULDs 18 oder Gepäckwägen 18 geladen, anschließend werden diese Transporteinheiten 18 hin zum Flugzeug transportiert.

Figur 5 zeigt als Ausführungsform eine Förderanlage 2 mit einem als Roboter 6 ausgestalteten Vertikalförderer 6.

Die Erfindung bezieht sich auf die nun dezentrale an den als Senken agierenden Gepäckkarussellen 10 angeordneten Lagerblöcke 8.1-8.9. Diese Lagerblöcke 8.1-8.9 werden nun direkt ohne die Förderstrecken des Verteilsystems 4 zu nutzen an die Senken (Gepäckkarusselle 10) angebunden. Die dem Gepäckkarussell 10 schon bei der Eingabe in das System 2 zugeordneten Gepäckstücke 14 werden direkt in dem ihrem Ziel-Gepäckkarussell 10.i zugeordneten Lagerbereich 8.i eingelagert.

Im Gegensatz zu früher wird zur Auslagerung der Gepäckstücke 14 aus dem Speichersystem 8 die Wannen-Fördertechnik der Endsortierung 4 nicht benötigt.

Gemäß einer weiteren Ausführungsform erfolgt die Verbindung zwischen dem Lagerbereich 8 und der Auslagerebene 11 durch einen Heber 6 (Lift, Vertikalförderer) oder aber auch durch einen Roboter 6 (siehe Figur 5).

Wird die Verbindung zwischen dem Lagerbereich 8 und den Gepäckkarussellen 10 Gemäß einer Ausführungsform durch einen Roboter 6 ausgeführt, kann dieser eine Auswahl oder alle der nachfolgenden Aufgaben übernehmen:
- Transport der Ladungsträger 16 von der Verteilebene 4 in den Lagerbereich 8 und umgekehrt.
- Transport der Ladeeinheiten 16 von der Verteilebene 4 zu den Gepäckkarussellen 10 und umgekehrt.
- Transport der Ladeeinheiten 16 vom Lagerbereich 8 zu den Gepäckkarussellen 10 und umgekehrt-
- Auslehren der Ladeeinheit 16 auf dem Gepäckkarussell 10.
- Stapeln und vereinzeln leerer und voller Gepäckwannen 16.

Der Roboter 6 kann zusätzlich zu den Aufgaben eines einfachen Vertikalförderers 6 folgende Aufgaben übernehmen, kann jedoch dennoch weiterhin als Vertikalförderer 6 bezeichnet werden: Beladene Gepäckwannen 16 können vom Roboter 6 direkt vom Verteilsystem 4 zum Gepäckkarussell 10, vom Verteilsystem 4 auf eine Speicherebene 8', 8" und von der Speicherebene 8', 8" direkt zum Gepäckkarussell 10 transportiert werden. Leere Gepäckwannen 16 können direkt vom Gepäckkarussell 10 zum Verteilsystem 4, vom Gepäckkarussell 10 zur Speicherebene 8', 8" und von der Speicherebene zum Verteilsystem 4 transportiert werden. Zusätzlich kann der Roboter 4 das Auskippen des Gepäckstücks 14 aus der Gepäckwanne 16 auf das Gepäckkarussell 10, sowie das Stapeln von leeren sowie befüllten Gepäckwannen 16 übernehmen.

Schon bei der Einlagerung in das Speichersystem 8 ist der üblicherweise genutzte Auslagerbereich 10 definiert. Nutzt man dieses Wissen und stellt in der Nähe der Ausgabebereiche 10 nun Speicher 8.i zur Verfügung, wird die Doppelbelastung auf das Transportsystem 4 sowie der benötigte Zeitvorlauf deutlich reduziert. Zudem wird so senkenbezogen (flugrein oder karussellrein) eingelagert. Damit kann auf die bisher notwendige Einzelplatzlagerung verzichtet und die Trays können in Stapeln eingelagert und transportiert werden. So werden u.a. die folgende Vorteile erzielt: Modulare, unkomplizierte Systemlösung; Kosteneinsparung; Transportweg- und Zeitreduzierung; geringerer Platzbedarf; wartungsfreundlicher, geringere Anzahl an verschiedenen Komponenten; erhöhte Ausfallsicherheit

### Bezugszeichenliste

- 2: Förderanlage
- 4: Verteilsystem, Förderebene für noch nicht zwischengespeicherte Ladungsträger
- 6(.1), 6.2: (erster) Vertikalförderer, weiterer (zweiter) Vertikalförderer / Lift / Hebevorrichtung
- 8: Speichersystem(e) mit erster Speicherebene 8' und optionaler zweiter Speicherebene 8"
- 8.1, 8.2,: erstes, zweites, ... Speichersystem / Speicherbereich
- 10.1, 10.2,: erste, zweite, ... Endstelle/ Gepäckkarussell
- 11: Auslagerebene
- 12.1, 12.2: erste, zweite, ... Bedieneinheit / Ein- und Auslagervorrichtung / Shuttle
- 14: Gepäckstück
- 16: Ladungsträger / Gepäckwanne / Ladungseinheit
- 18: Auslagervorrichtung (ULD, Gepäckwagen o.ä.)
- 20: Zusatzspeichersystem
- 22: Regalreihe
- 24: Längsrichtung
- 26: Bedienweg / Gasse / Gang

## Patentansprüche

1. Förderanlage für Stückgüter mit zugeordneten Sortierkriterien in einheitlichen Ladungsträgern, insbesondere eine Flughafen-Gepäckförderanlage, umfassend ein Verteilsystem, mindestens ein Speichersystem und mindestens eine Endstelle, insbesondere ein Gepäckkarussell, wobei:
- das Verteilsystem oberhalb des Speichersystems und das Speichersystem oberhalb der Endstelle angeordnet ist;
- die Endstelle mindestens einen eigenen Vertikalförderer umfasst, ausgestaltet zum direkten Überführen eines Ladungsträgers vom Verteilsystem zum Speichersystem und umgekehrt, sowie vom Speichersystem zur Endstelle und umgekehrt;
- jede Endstelle einem Speichersystem zugeordnet ist;
- die Förderanlage ausgestaltet ist, jedes Speichersystem mit Ladungsträgern mit übereinstimmenden Sortierkriterien zu befüllen;
- das Speichersystem eine durch horizontale Bedienwege gebildete Speicherstruktur aufweist, so dass diese Speicherstruktur eine im Wesentlichen parallele Reihenstruktur mit jeweils im Wesentlichen zueinander parallelen Regalreihen aufweist;
- wobei die Bedienwege in dem Speichersystem jeweils in ihrer Querrichtung entlang den Regalreihen beiderseits durch Regaleinheiten der jeweiligen Regalstruktur begrenzt werden und wobei die Bedienwege zumindest annähernd gradlinig verlaufende, sich in Längsrichtung erstreckende Wege sind, auf dem sich eine von der Förderanlage umfasste Bedieneinheit bewegt und wobei sich sämtliche Bedienwege des Speichersystems entlang der Längsrichtung erstrecken;
- wobei die Bedieneinheit ausgestaltet ist zum Transportieren der Ladungsträger entlang den Regalreihen und zum Be- und Entladen von Regalfächern der Regalreihen; und
- wobei die Bedieneinheit und der Vertikalförderer zur gegenseitigen Übernahme von Ladungsträgern ausgestaltet sind oder die Bedieneinheit von dem Vertikalförderer umfasst ist.

2. Förderanlage nach Anspruch 1, **dadurch gekennzeichnet, dass** das Speichersystem zwei oder mehr Speicherebenen aufweist, wobei sich sämtliche Bedienwege aller Speicherebenen entlang der Längsrichtung erstrecken, wobei die Bedieneinheit ausgestaltet ist zum Be- und Entladen der Regalfächer auf den zwei oder mehr Speicherebenen oder jede Speicherebene mindestens eine eigene Bedieneinheit aufweist.

3. Förderanlage nach einem der vorhergehenden Ansprüche, **dadurch gekennzeichnet, dass**
die Förderanlage zwei oder mehr aneinander angrenzende Speichersysteme umfasst, wobei eine Aufteilung dieser Speichersysteme dynamisch erfolgen kann.

4. Förderanlage nach Anspruch 3, **dadurch gekennzeichnet, dass** die Bedienwege der aneinander angrenzenden Speichersysteme ineinander münden, und eine Bedieneinheit ausgestaltet ist, jedes dieser Speichersysteme zu bedienen.

5. Förderanlage nach einem der vorhergehenden Ansprüche, **dadurch gekennzeichnet, dass**
der Vertikalförderer zum Entleeren des Stückguts von der Ladeeinheit auf die Endstelle ausgestaltet ist.

6. Förderanlage nach einem der vorhergehenden Ansprüche, **dadurch gekennzeichnet, dass**
der Vertikalförderer und/oder die Bedieneinheit ausgestaltet sind zum Stapeln und/oder Vereinzeln von leeren und/oder mit Stückgütern beladenen Ladungsträgern.

7. Förderanlage nach einem der vorhergehenden Ansprüche, zudem umfassend
ein Zusatzspeichersystem mit Regalfächern angeordnet oberhalb der Endstelle, wobei der Vertikalförderer ausgestaltet ist zum Überführen des Ladungsträgers vom Speichersystem zum Zusatzspeichersystem, wobei das Zusatzspeichersystem eine Zusatzbedieneinheit zum Be- und Entladen dieser Regalfächer aufweist und wobei die Zusatzbedieneinheit und der Vertikalförderer zur gegenseitigen Übernahme von Ladungsträgern ausgestaltet sind oder die Zusatzbedieneinheit von dem Vertikalförderer umfasst ist.

8. Verfahren zum Speichern von Ladungsträgern in einer Förderanlage nach einem der vorhergehenden Ansprüche, wobei
- ein mit einem Stückgut beladener Ladungsträger mit dem Vertikalförderer und der Bedieneinheit von dem Verteilsystem in ein Regalfach des Speichersystems geladen wird, wobei das Speichersystem mit Ladungsträgern mit übereinstimmenden Sortierkriterien beladen wird;
- der Ladungsträger mit der Bedieneinheit aus dem Regalfach entladen, entlang des Bedienweges hin zum Vertikalförderer transportiert und mit diesem an die Endstelle übergeben wird.

9. Verfahren nach Anspruch 8, zudem umfassend den Verfahrensschritt
Be- und Entladen von Regalfächern auf den zwei oder mehr Speicherebenen mit der Bedieneinheit.

10. Verfahren nach einem der Ansprüche 8 bis 9, **dadurch gekennzeichnet, dass**
der Ladungsträger mit einem ersten Vertikalförderer von dem Verteilsystem an die Bedieneinheit des Speichersystems übergeben, mit der Bedieneinheit in ein Regalfach dieses Speichersystems geladen wird und nach dem Entladen dieses Regalfachs mit dieser oder einer weiteren Bedieneinheit an einen zweiten Vertikalförderer übergeben wird, wobei dieser zweite Vertikalförderer sowohl diesem als auch einem weiteren Speichersystem zugeordnet sein kann.

11. Verfahren nach einem der Ansprüche 8 bis 10, zudem umfassend den Verfahrensschritt
Bewegen der Bedieneinheit entlang des Bedienweges zwischen dem Vertikalförderer einer ersten Endstelle , einem Regalfach und einem weiteren Vertikalförderer derselben oder einer weiteren Endstelle.

12. Verfahren nach einem der Ansprüche 8 bis 11, zudem umfassend den Verfahrensschritt
Entleeren des Stückguts von der Ladeeinheit auf die Endstelle mit dem Vertikalförderer.

13. Verfahren nach einem der Ansprüche 8 bis 12, zudem umfassend den Verfahrensschritt
Stapeln und/oder Vereinzeln von leeren und/oder mit Stückgütern beladenen Ladungsträgern mit dem Vertikalförderer und/oder der Bedieneinheit.

14. Verfahren nach Anspruch 13, zudem umfassend den Verfahrensschritt
Überführen von einem Stapel von Ladungsträgern vom Speichersystem an das Verteilsystem mit dem Vertikalförderer und Fördern dieses Stapels entlang dem Verteilsystem.

15. Verfahren nach einem der Ansprüche 13 bis 14, **dadurch gekennzeichnet, dass**
der Vertikalförderer und/oder die Bedieneinheit einen Stapel von Ladungsträger ebenso wie einen einzelnen Ladungsträger behandelt.
